# EUROPEAN PATENT APPLICATION

(11) **EP 2 312 191 A1**
(43) Date of publication of application: **20.04.2011**
(21) Application number: 10186846.1
(22) Date of filing: 07.10.2010
(51) Int. Cl.: F16L 25/00

(54) **Improved corrugated flexible hose fitting and corrugated flexible hose including this fitting**

(30) Priority: 14.10.2009 IT MI20091763
(71) Applicant: IVG COLBACHINI S.p.A., 35030 Cervarese S. Croce PD (IT)
(72) Inventor: Aldinio Colbachini, Giuseppe, I-35030, Cervarese Santa Croce (PD) (IT)
(74) Representative: Cicogna, Franco

(57) **Abstract**

A fitting for a corrugated flexible hose, of a type comprising two half-shells coupled at their respective end portions, characterized in that said half-shells comprise an inner surface including a plurality of ribs each adapted to engage in a helical groove formed on an outer surface of said corrugated flexible hose.

## Description

### BACKGROUND OF THE INVENTION

The present invention relates to an improved fitting specifically designed for fixing corrugated flexible hoses or tubes to user devices.

The invention also relates to the corrugated flexible hose or tube including this fitting.

### FIELD OF THE INVENTION

The field of the invention is that of the corrugated flexible hoses or tubes, made of a deformable material, such as rubber, plastics materials or the like, the outer surface of which comprises a corrugated or coiled pattern.

In particular, the inventive hoses or tubes have been designed to be applied in civil and industrial applications for conveying food products, fuels, liquids and the like.

In all the above applications, a good flexibility, a light weight of the hose, and an easy handling thereof, represent essential requirements for conveying the intended types of products.

For coupling corrugated hoses to respective user devices (such as a tank or the like) is already known to use outer clamp or collar elements, conventionally constituted by a single clamping band joined at the two end portions thereof, or including two arch half-shells, which are mutually closed on the top of the end portions of the hose to be connected.

However, prior hose fittings of the above disclosed type are efficient only for smooth hoses, since the engagement section of said prior fittings on the corrugated hose outer wall does assure a desired mechanical or hydraulic sealing or tightness connection.

For solving the above problem, the prior art provides to design the corrugated hose end portion in the form of a sleeve or a smooth tube portion, thereby efficiently receiving either the clamp band or the half-shell portions of the corresponding fitting.

However, this approach has the drawback of requiring an additional rather complex machining operation, which represents an additional step in the making process of the corrugated flexible hose, which negatively affects both the hose making time and the end cost thereof.

A further drawback of prior corrugated hose fittings is that it is not possible to provide and store a plurality of corrugated flexible hoses having any desired hose length, since they must be specifically prepared each time with smooth surface end portions, thereby allowing to make respective sleeves to be attached to the fitting.

A further problem affecting prior flexible hose fittings is the machining tolerance issue, since precise hose machining tolerances must be each time accurately fitted to the sleeve sides.

### SUMMARY OF THE INVENTION

Accordingly, the main object of the present invention is to provide a novel corrugated flexible hose fitting which is adapted to also efficiently operate on the corrugated portion of the flexible hose, thereby overcoming any requirements of carrying out additional machining operations on the end portions of the corrugated hose.

According to one aspect of the present invention, the above mentioned objects as well as yet other objects, which will become more apparent hereinafter, are achieved by a corrugated flexible hose fitting as herein claimed.

With respect to prior flexible hose fittings, the inventive fitting has the very important advantage that it can be efficiently directly applied on the corrugated end portion of the hose, without requiring any provisions of additional smooth-surface sleeve members.

Thus, the invention not only greatly simplifies the making of the corrugated flexible hose, due to the fact that it is not necessary to perform additional machining operations on the hose end portions, but, moreover, it provide a fitting which may be easily and quickly assembled, since it is directly applied on the corrugated surfaces of the flexible hose.

To the above advantages, it should be also added a further likewise important advantage, since the invention allows to make corrugated flexible hoses having any desired lengths, which may be cut as desired, depending on requirements, directly at the flexible hose use time.

Like advantages are moreover achieved with respect to possible maintenance operations to be performed on damaged flexible hoses, or in replacing hoses to be necessarily replaced.

### BRIEF DESCRIPTION OF THE DRAWINGS

The above mentioned objects, advantages and features of the present invention will become more apparent hereinafter from the following detailed disclosure of a preferred embodiment of the invention, which is illustrated, by way of an indicative, but not limitative, example in the accompanying drawings, where:
Figure 1 is a longitudinal cross section view of a prior corrugated flexible hose, including an end sleeve element and a related fitting shown in a non assembled condition thereof;
Figure 2 is a side partially cross-sectioned view showing a corrugated flexible hose including the flexible hose fitting according to the present invention;

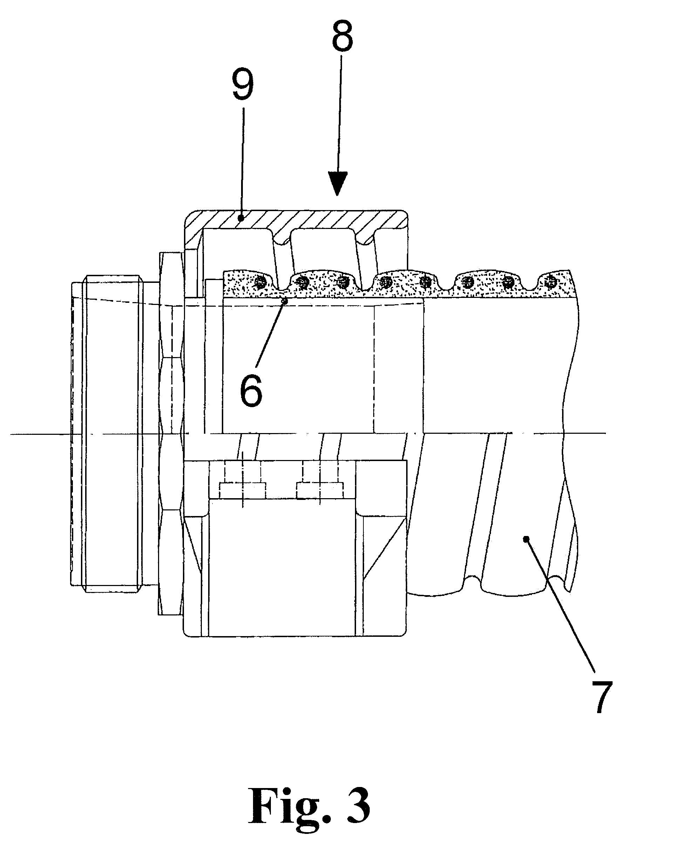

Figure 3 shows a further corrugated flexible hose, including the inventive fitting, said fitting being shown in a non definitely assembled condition on the hose body;

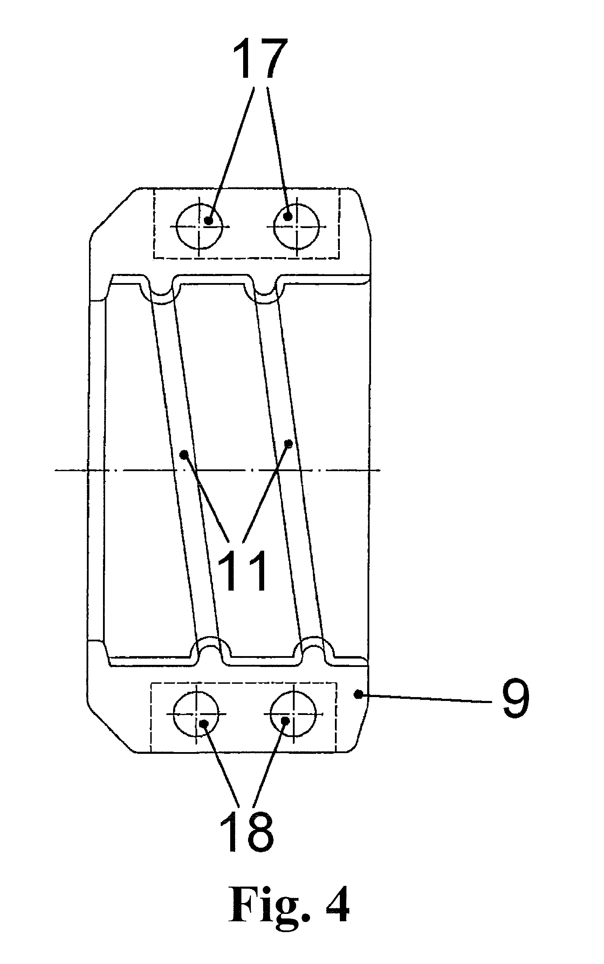

Figure 4 shows the hose fitting of figure 2 in an open condition thereof; and
Figure 5 is an exploded view showing the flexible hose fitting according to the present invention.

### DESCRIPTION OF THE PREFERRED EMBODIMENTS

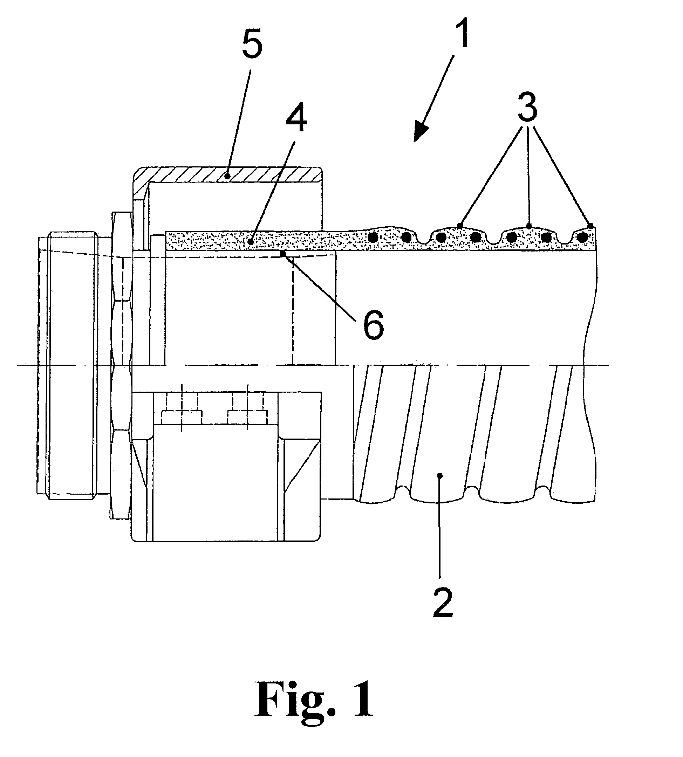

In figure 1, a prior corrugated flexible hose has been indicated by the reference number 1.

This corrugated hose comprises a flexible material hose body 2, on an outer surface thereof a corrugated pattern 3 is formed.

At the free end portion of the body 2 is moreover provided a smooth surface sleeve element 4, designed for receiving a fitting half-shell 5 which, in abutment against an inner sleeve 6 of a rigid material, is used for assembling or clamping the hose 1 to any desired device.

As shown, moreover, for applying the fitting half-shell 5, it is necessary to shape the end portion of the corrugated body 2 of the hose 1 in the form of a smooth surface sleeve 4.

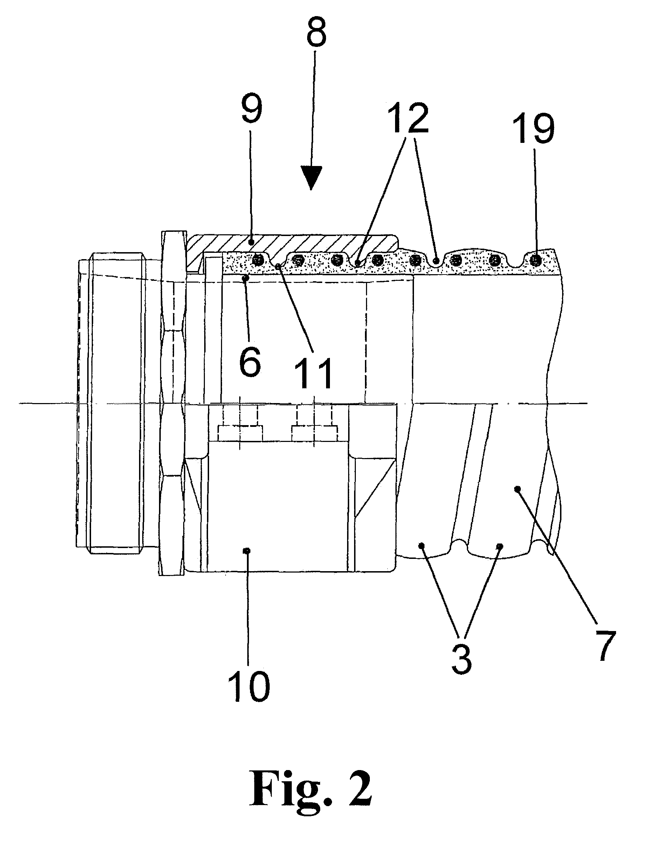

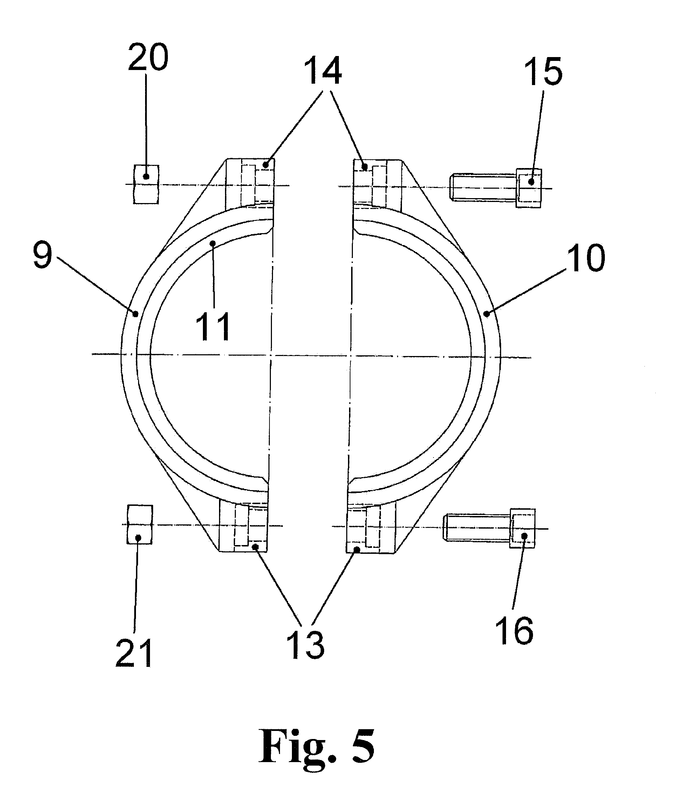

To overcome this constructional limitation, and as is shown in figures 2 and 5, at the end portion of the inventive flexible hose 7, including respective corrugated patterns 3, an inventive fitting 8 is directly assembled on the hose outer surface.

Said inventive fitting 8 comprises two fitting half-shells 9 and 10, having an inner surface including a plurality of helical ribs 11, adapted to tightly engage in corresponding helical grooves 12 of the hose 7.

Said half-shells 9 and 10 are in turn mutually connected or closed, at their respective opposite end portions 13 and 14, by the fitting, by closing screws 15 and 16 and related nuts 20 and 21, said screws being respectively engaged in respective holes 17 and 18, thereby clamping the fitting 8 on the corresponding corrugated end portion of the hose 7.

Advantageously, a reinforcement helical coil or spiral 19 may be embedded in a wall of said tube.

Also advantageously, within said hose 7 a sleeve 6 adapted to counteract and resist against the clamping action provided by said half-shells 9 and 10 on the wall of the hose 7 is housed.

In particular, it has been found, from tests carried out on the inventive flexible hose that, without the sleeve 6, the sealing pressure of the hose on the fitting 8 is less than 3 bars.

On the contrary, by applying the sleeve 6, the sealing pressure of the inventive hose would be, as it has been actually found, larger than 30 bars.

In this connection it should be pointed out that the inventive flexible hose 7 is made of a light flexible material, which can be easily handled, such as rubber and plastics materials in general.

It should be also apparent that the inventive fitting 8 allows to tightly and firmly connect the corrugated flexible hose 7 to any desired user device, such as a tank or the like, without the need of forming, at the end portion of the corrugated hose, a smooth surface sleeve, for receiving the fitting 8.

## Claims

1. A fitting for a corrugated flexible hose, of a type comprising two half-shells coupled at their respective end portions, **characterized in that** said half-shells comprise an inner surface including a plurality of ribs each adapted to engage in a helical groove formed on an outer surface of said corrugated flexible hose.

2. A fitting, according to claim 1, **characterized in that** said fitting further comprises a sleeve engaged in said end portion of said hose at a position corresponding to an engagement position of said hose half-shells.

3. A fitting, according to claim 1, **characterized in that** said hose half-shells comprise, at said end portions thereof, a plurality of recesses for engaging respective clamping means therein.

4. A corrugated flexible hose, **characterized in that** said flexible tube comprises a tube fitting according to claim 1.

5. A hose, according to claim 4, **characterized in that** said hose is made either of a rubber or a flexible plastics material.

6. A hose, according to claim 4, **characterized in that** said hose further comprises a reinforcement helical coil.
